# EUROPEAN PATENT SPECIFICATION

(11) **EP 3 599 661 B1**
(45) Date of publication and mention of the grant of the patent: **22.12.2021**
(21) Application number: 19188095.4
(22) Date of filing: 24.07.2019
(51) Int. Cl.: H01Q 1/24, H01Q 5/321, H01Q 5/328, H01Q 9/04, H01Q 9/42, H01Q 5/378

(54) **ANTENNA AND MOBILE TERMINAL**
ANTENNE UND MOBILES ENDGERÄT
ANTENNE ET TERMINAL MOBILE

(30) Priority: 27.07.2018 CN 201810841024
(43) Date of publication of application: 29.01.2020
(73) Proprietor: Beijing Xiaomi Mobile Software Co., Ltd., Beijing 100085 (CN)
(72) Inventor: LIU, Jiarong, Beijing, Beijing 100085 (CN)
(74) Representative: dompatent von Kreisler Selting Werner - Partnerschaft von Patent- und Rechtsanwälten mbB

(56) References cited:
- CN-A- 105 811 079
- CN-A- 108 232 421
- KR-A- 20170 130 820

## Description

### TECHNICAL FIELD

The embodiments of the present disclosure relate to the technical field of mobile terminals, and in particular to an antenna and a mobile terminal.

### BACKGROUND

With the arrival of a 5G era, more and more bands are available for signal transmission, so that demands for antenna radiation in a mobile terminal are also increasing. For example, the antenna is required to be able to radiate signals in a low frequency millimeter wave band in 5G in addition to an existing band. The low frequency millimeter wave band is commonly known as a Sub-6GHz band. However, with the rapid development of the mobile terminal technology, a screen-to-body ratio of the mobile terminal is increasing, and a number of devices having a metal structure internally is also increasing, thereby causing the decrease of a clearance area for designing the antenna inside the body of the mobile terminal. Therefore, at present, it is urgently necessary to design an antenna in a smaller clearance area to implement radiation of various band signals.

Chinese Patent Application Publication CN 105 811 079 A discloses an antenna device. When the antenna device is arranged in an electronic device comprising a circuit board, the antenna device is used for receiving and transmitting wireless signals of the electronic device. The antenna device comprises a radiating body and an electric array susceptance component, wherein the radiating body comprises a first end which is grounded due to arrangement on the circuit board, the electric array susceptance component has a second end and a third end, the second end is connected with the radiating body, the third end is grounded due to arrangement on the circuit board, the electric array susceptance component has K kinds of different impedance values, and K is an integer greater than or equal to 2; when in a powered-on state, the radiating body can generate K kinds of resonance oscillation signals different in frequency range based on the K kinds of different impedance values.

Korean Patent Application Publication KR 20170130820 A discloses an antenna device for a mobile communication terminal. The antenna for a mobile communication terminal according to an embodiment of the present invention comprises: a substrate which includes a ground pattern having a predetermined area on one surface thereof and is embedded in a mobile communication terminal; a first metal frame which is spaced apart from the substrate, is disposed at an outer periphery of the mobile communication terminal, and is used as a first radiator; a second metal frame which is spaced apart from the first metal frame, is disposed at an outer periphery of the mobile communication terminal, and is used at least partially as a second radiator; a feed line which is formed in a conductive pattern on the other surface of the substrate corresponding to one surface of the substrate on which the ground pattern is formed and has one end connected to a feeding circuit and the other end connected to the first metal frame; and a connection structure which electrically connects a side end portion of the ground pattern and the second metal frame. The ground pattern formed on one surface of the substrate has a slot for generating an induced current in the ground pattern as power is supplied through the feed line formed on the other surface of the substrate. Therefore, the circuit configuration can be simplified while ensuring the multi-band characteristic and the wide-band characteristic of the antenna device.

Chinese Patent Application Publication CN 108 232 421 A discloses an antenna system and a mobile terminal. The antenna system comprises a metal rear cover, a first feeding point and system ground, wherein a U-shaped slot is formed in the bottom of the metal rear cover; the metal rear cover is divided into a radiation part and a grounding part by the U-shaped slot; the grounding part is connected with the system ground; the radiation part comprises a first end and a second end; the first end and the second end are respectively connected with the grounding part; breaking joints are formed in the radiation part; and the radiation part is electrically connected with the first feeding point so as to form a main antenna. Compared with a scheme in a related technology that the double breaking joints are formed in the metal rear cover, the technical scheme disclosed by the invention has the advantages that the structural strength of the metal rear cover is effectively improved, and the appearance quality of the metal rear cover is improved, so that the user satisfaction is improved.

### SUMMARY

Accordingly, the embodiments of the present disclosure provide an antenna and a mobile terminal, which can implement radiation of various band signals.

The features of devices according to the present invention are defined in the independent claims, and the preferable features according to the present invention are defined in the dependent claims.

According to a first aspect of the embodiments of the present disclosure, there is provided an antenna, applied to a mobile terminal, the mobile terminal includes a first metal frame and a second metal frame, a breaking joint is provided between a first end of the first metal frame and a first end of the second metal frame, the length of the first metal frame is within the range of a quarter wavelength of a specified band, and the length of the first metal frame is greater than the length of the second metal frame,
herein the first metal frame includes a feeding point which is located at a specified position of the first end of the first metal frame, the feeding point is coupled to a first end of a first capacitive device, a second end of the first capacitive device is coupled to a first end of a changeover switch, a second end of the changeover switch is coupled to a first end of a second capacitive device or a first end of an inductive device, a second end of the second capacitive device and second end of the inductive device are coupled to a first ground point, and a second end of the first metal frame is coupled to a second ground point, so as to form a first sub-antenna; and
a second end of the second metal frame is coupled to a third ground point, so as to form a second sub-antenna.

In the aforementioned technical solution, the antenna is mainly implemented by a first metal frame and a second metal frame of the mobile terminal, a breaking joint being provided between the first metal frame and the second metal frame. A specified position of an end, close to the breaking joint, of the first metal frame includes a feeding point, the feeding point is coupled to a first capacitive device, the first capacitive device is coupled to a changeover switch, the changeover switch is coupled to a second capacitive device or an inductive device, the second capacitive device and the inductive device are coupled to a first ground point, and the first metal frame is coupled to a second ground point, so as to form a portion of the antenna. In addition, the second metal frame is coupled to a third ground point, so as to form another portion of the antenna. Since the length of the first metal frame is within the range of a quarter wavelength of a specified band, when the changeover switch is switched between the second capacitive device and the inductive device, the two portions of the antenna may not only implement radiation of the existing band signal, but also may implement radiation of a signal having a frequency of 2.3 GHz to 2.7 GHz by using a harmonic wave under a high-order mode of the first metal frame, that is, may also radiate a signal of a Sub 6GHz band. In the embodiments of the present disclosure, the antenna implements radiation of various different band signals without the addition of other devices and antenna branches.

It will be appreciated that the above general description and the following detail description are only exemplary and explanatory, and cannot limit the present disclosure.

### BRIEF DESCRIPTION OF THE DRAWINGS

The accompanying drawings herein are incorporated into the specification and constitute a portion of the present specification, illustrate the embodiments conforming to the present disclosure, and are used to explain the principle of the present disclosure with the specification.
FIG. 1 is a structural schematic diagram of an antenna according to an exemplary embodiment.
FIG. 2 is a schematic diagram of a front solid structure of an antenna according to an exemplary embodiment.
FIG. 3 is a schematic diagram of a back solid structure of an antenna according to an exemplary embodiment.
FIG. 4 is a schematic Smith diagram according to an exemplary embodiment.
FIG. 5 is an equivalent circuit diagram according to an exemplary embodiment.
FIG. 6 is a schematic diagram of a signal return loss according to an exemplary embodiment.
FIG. 7 is an equivalent circuit diagram according to an exemplary embodiment.
FIG. 8 is a schematic diagram of a signal return loss according to an exemplary embodiment.

Drawing reference labels:
1: First metal frame; 2: second metal frame; 3: feeding point; 4: first capacitive device; 5: changeover switch; 6: second capacitive device; 7: inductive device.

### DETAILED DESCRIPTION

Exemplary embodiments will be described in detail here, examples thereof being expressed in the drawings. When the following description involves the drawings, identical digits in different drawings represent identical or similar elements unless otherwise indicated. Implementation manners described in the following exemplary embodiments do not represent all implementation manners consistent with the present disclosure. On the contrary, they are only examples of a device and a method consistent with some aspects of the present disclosure.

Before an antenna structure and a signal radiation principle provided by the embodiments of the present disclosure arc described in detail, an application scenario involved in the embodiments of the present disclosure will be briefly introduced first.

At present, similar to a Time Division Long Term Evolution (TDD-LTE) and a Frequency Division Duplex Long Term Evolution (FDD-LTE) of a 4G era, a 5G technology at the present stage also has two development directions namely millimeter wave bands of Sub-6GHz and 6GHz or above. In the two directions, the implementation of Sub-6GHz is relatively easy and can follow the existing infrastructure of an operator, and the division of bands is also relatively clear. Therefore, over the next few years, the Sub-6GHz band will become an important transitory technology of a 5G upgrade plan of the operator. The Sub-6GHz band may include bands n77, n78 and n79, such as 3.3 GHz to 3.6 GHz in the band n77 domestically issued to be used, and 4.8 GHz to 5 GHz in the used band n79. This requires the demands for radiating the antenna in the mobile terminal to increase. That is, the antenna is required to not only radiate a signal of the existing band, but also radiate a signal of the above Sub-6GHz band, the existing band including, for example, 2G, 3G or 4G. However, with the popularization and evolution of full screen and metal materials, a clearance area reserved in the mobile terminal for the antenna is more and more compact. Thus, it will be very difficult to radiate a signal of a Sub-6GHz band on the basis of radiating the existing band signal.

To this end, the embodiments of the present disclosure provide an antenna. The antenna may implement radiation of signals of the existing band and a Sub-6GHz band without the addition of a device such as a switch and antenna branches, so as to solve a contradiction between the increasingly difficult antenna design and the increase of band demands.

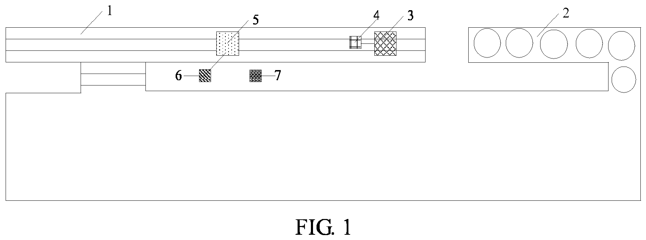

The following will introduce the antenna provided by the embodiments of the present disclosure in detail with reference to the drawings. Referring to FIG. 1, FIG. 1 is a structural schematic diagram of an antenna according to an exemplary embodiment. The antenna is applied to a mobile terminal. The mobile terminal mainly includes a first metal frame 1 and a second metal frame 2. A breaking joint is provided between a first end of the first metal frame 1 and a first end of the second metal frame 2. The length of the first metal frame 1 is within the range of a quarter wavelength of a specified band, and the length of the first metal frame 1 is greater than the length of the second metal frame 2.

The first metal frame 1 includes a feeding point 3, the feeding point 3 being located at a specified position of the first end of the first metal frame 1. The feeding point 3 is coupled to a first end of a first capacitive device 4, a second end of the first capacitive device 4 is coupled to a first end of a changeover switch 5, a second end of the changeover switch 5 is coupled to a first end of a second capacitive device 6 or a first end of an inductive device 7, a second end of the second capacitive device 6 and a second end of the inductive device 7 are coupled to a first ground point, and a second end of the first metal frame 1 is coupled to a second ground point, so as to form a first sub-antenna. A second end of the second metal frame is coupled to a third ground point, so as to form a second sub-antenna.

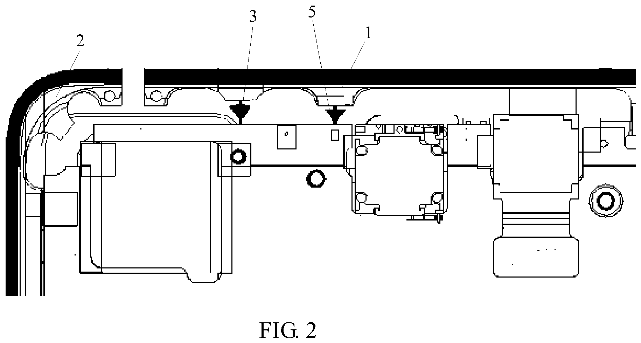

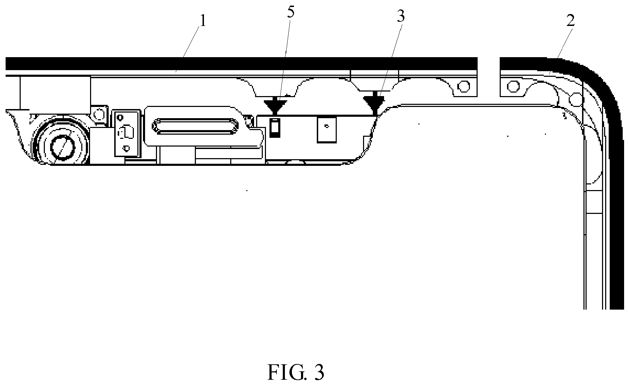

Referring to FIG. 2 and FIG. 3, FIG. 2 and FIG. 3 are schematic diagrams of a front solid structure and a back solid structure of the antenna on the mobile terminal, respectively. That is to say, the antenna is designed here by using the existing first metal frame 1 and second metal frame 2 of the mobile terminal. Thus, space occupied by the antenna may be saved without the addition of other devices or antenna branches. That is, an antenna may be designed in a smaller clearance area by using the first metal frame 1 and the second metal frame 2, and radiation of various band signals is implemented by using the antenna.

In some embodiments, both the first metal frame 1 and the second metal frame 2 may be a bottom frame of the mobile terminal. Of course, in some other embodiments, both the first metal frame 1 and the second metal frame 2 may also be a top frame of the mobile terminal, or, either the first metal frame 1 or the second metal frame 2 may be the top frame of the mobile terminal while the other one is the bottom frame of the mobile terminal, which is not limited in the embodiments of the present disclosure.

The above specified position may be customized by a user according to actual demands, that is, in the embodiments of the present disclosure, a feeding point 3 is disposed at a tail end, close to the breaking joint, of the first metal frame 1, and the feeding point 3 is coupled to the first end of the first capacitive device 4. In addition, in order to implement radiation of different band signals, the second end of the first capacitive device 4 is coupled to the first end of the changeover switch 5, and the second end of the changeover switch 5 is coupled to the first end of the second capacitive dcvicc 6 or the first end of the inductive device 7, so that when the changeover switch 5 is switched between the second capacitive device 6 and the inductive device 7, the radiation of different band signals may be implemented.

Further, since there is an electric field zero point in a radiating magnetic field of the first metal frame 1, the changeover switch 5 may be usually loaded to a position of a non-electric field zero point of the first metal frame 1 under a low-order mode and a high-order mode so as not to affect the operation of the changeover switch 5. For example, in some embodiments, the changeover switch 5 may be located at a center point of the first metal frame 1.

In a possible implementation manner, the second end of the first capacitive device 4 is coupled to the first end of the changeover switch 5 through the first metal frame 1.

For example, the second end of the first capacitive device 4 is coupled to the first metal frame 1, and the first end of the changeover switch 5 is coupled to the first metal frame 1. Since the first metal frame 1 has conductivity, the second end of the first capacitive device 4 is coupled to the first end of the changeover switch 5 through the first metal frame 1.

In some embodiments, the second end of the first capacitive device 4 is coupled to the first metal frame 1 through an elastic piece, and the first end of the changeover switch 5 is coupled to the first metal frame 1 through an clastic piccc.

Further, the second end of the first capacitive device 4 may be coupled to the first metal frame 1 through one or more elastic pieces, and the first end of the changeover switch 5 may also be coupled to the first metal frame 1 through one or more elastic pieces.

In some embodiments, an example that the antenna can radiate a band n77 in Sub-6GHz is taken. In this case, the above specified band may range from 1.1 GHz to 1.2 GHz. In this way, the length of the first metal frame 1 meets a quarter wavelength mode around the frequency range of 1.1 to 1.2 GHz, wherein the wavelength is the above specified band wavelength.

In a possible implementation manner, a difference between the length of the first metal frame 1 and 30 mm is within a preset range, and the length of the second metal frame 2 ranges from 16 mm to 20 mm. That is, the length of the second metal frame 2 is usually required to meet a low-order mode resonance length of a high frequency portion from 2.3 GHz to 2.7 GHz.

The above preset range may be customized by the user according to actual demands, that is, the length of the first metal frame 1 may be set as about 30 mm.

Further, the first capacitive device 4 has a capacitance ranging from 0.5 pF to 2.5 pF. In an optional implementation manner, in order to improve the radiation accuracy of the antenna, the first capacitive device 4 may be selected as an adjustable capacitor, so as to set the magnitude of a required capacitance value by adjusting the capacitance value of the adjustable capacitor during the implementation. For example, compared with a scenario where the changeover switch is switched to be coupled to the second capacitive device 6, when the changeover switch 5 is switched to be coupled to the inductive device 7, the capacitance value of the first capacitive device 4 may be adjusted to be slightly larger.

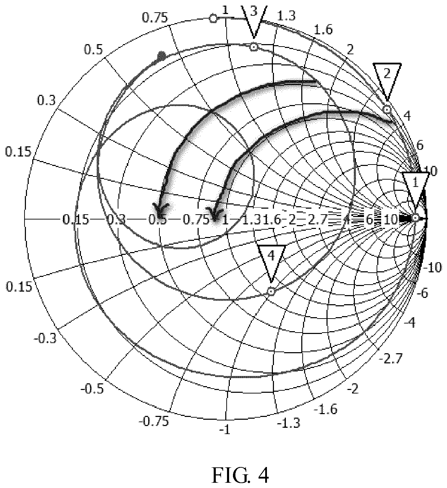

In the embodiments of the present disclosure, the position of the feeding point 3 is adjusted to be close to the tail end of the first metal frame 1. The length of the first metal frame 1 meets a quarter wavelength mode around a frequency range of 1.1 GHz to 1.2 GHz. In this case, as shown in FIG. 4, according to a smith diagram in FIG. 4, it is apparent that point mark1 corresponding to the frequency range of 1.1 GHz to 1.2 GHz falls on a smith zero axis, and a corresponding frequency point of 0.9 GHz falls around a 50 Ohm constant impedance circle in an inductive area, as shown in the position of point mark2 in the smith diagram. In this case, through a triple relation calculation, it is apparent that a resonance frequency under a three-quarter wavelength mode of the first metal frame 1 approximately falls around the range of 3.3 GHz to 3.6 GHz, such as a range of mark3 to mark4 in the smith diagram. This segment also falls on and intersects with the 50 Ohm constant impedance circle. Therefore, when a first capacitive device with a smaller capacitance value is connected to the feeding point 3 in series, low frequency portions of 2G, 3G and 4G bands and a portion of Sub-6GHz can be simultaneously drawn to be around 50 Ohm along the direction of an arrow, and two resonant modes are activated simultaneously. Thus, the radiation of various band signals may be implemented by using resonances under different wavelength modes corresponding to the first metal frame 1.

Further, since the width of the breaking joint may cause a certain influence on the antenna, in some embodiments, the width of the breaking joint between the first end of the first metal frame 1 and the second end of the second metal frame 2 may be set as 2 mm, so as to implement a good signal radiation.

It is to be noted that the first ground point, the second ground point and the third ground point may be equal to each other or may also be different from each other, which is not limited in the embodiments of the present disclosure.

The principle of radiating, by the antenna, various band signals will be introduced thereafter. As described above, when the changeover switch 5 is switched between the second capacitive device 6 and the inductive device 7, the radiation of different band signals may be implemented specifically as follows:

When the changeover switch 5 is switched to be coupled to the second capacitive device 6, the first sub-antenna and the second sub-antenna are configured to radiate a low-and-medium frequency signal and a signal having a frequency of 2.3 GHz to 2.7 GHz. When the changeover switch 5 is switched to be coupled to the inductive device 7, the first sub-antenna and the second sub-antenna are configured to radiate a high frequency signal and a signal having a frequency of 2.3 GHz to 2.7 GHz.

Further, when the changeover switch 5 is switched to be coupled to the second capacitive device 6, a portion between a position where the second capacitive device 6 is located in the first sub-antenna and the breaking joint and the second sub-antenna are jointly configured to radiate a medium frequency signal, a resonance under a quarter wavelength mode of the first sub-antenna is configured to radiate a low frequency signal, and a resonance under a three-quarter wavelength mode of the first sub-antenna is configured to radiate the signal having a frequency of 2.3 GHz to 2.7 GHz. Alternatively, when the changeover switch 5 is switched to be coupled to the inductive device 7, a portion between a position where the inductive device 7 is located in the first sub-antenna and the breaking joint and the second sub-antenna are jointly configured to radiate a high frequency signal, a resonance under a three-quarter wavelength mode of the first sub-antenna is configured to radiate a signal of the having a frequency of 2.3 GHz to 2.7 GHz.

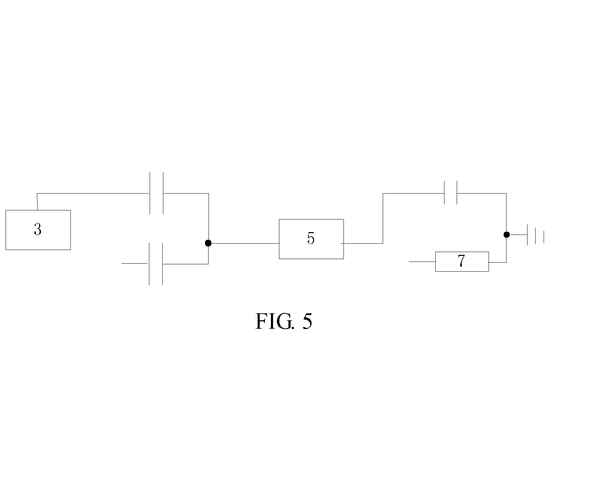

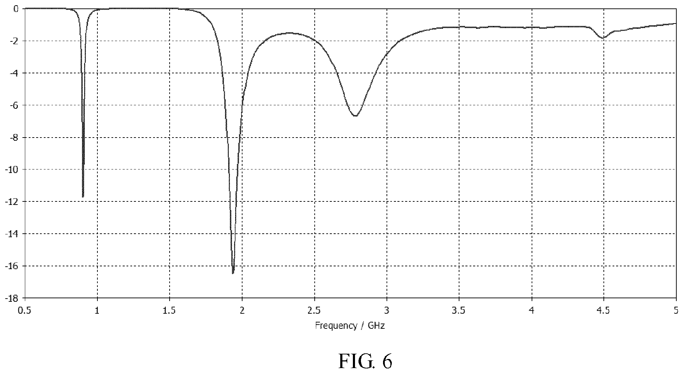

When the changeover switch 5 is switched to be coupled to the second capacitive device 6, referring to FIG. 5, FIG. 5 is an equivalent circuit diagram according to an exemplary embodiment. In this case, a resonance under a quarter wavelength mode of the first sub-antenna is configured to radiate a low frequency signal, and a resonance under a three-quarter wavelength mode of the first sub-antenna is configured to radiate a signal of a Sub-6GHz band. Referring to FIG. 6, FIG. 6 is a schematic diagram of a return loss of a radiated signal. From FIG. 6, it can be seen that the first sub-antenna and the second sub-antenna in this case implement radiation of a low-and-medium frequency signal and a signal of a Sub-6GHz band.

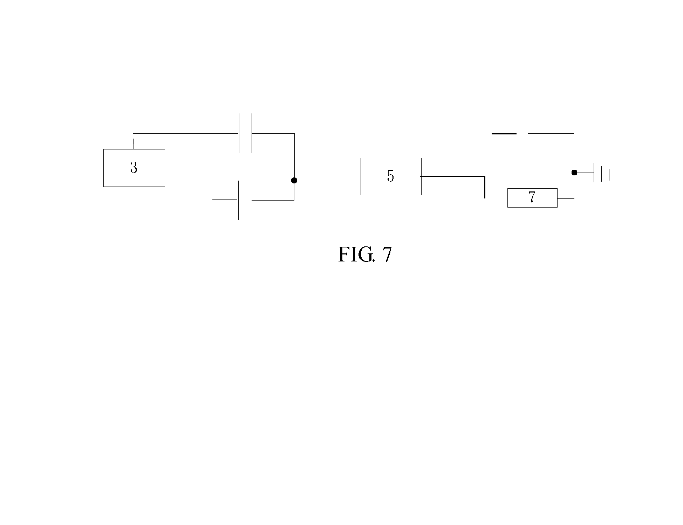

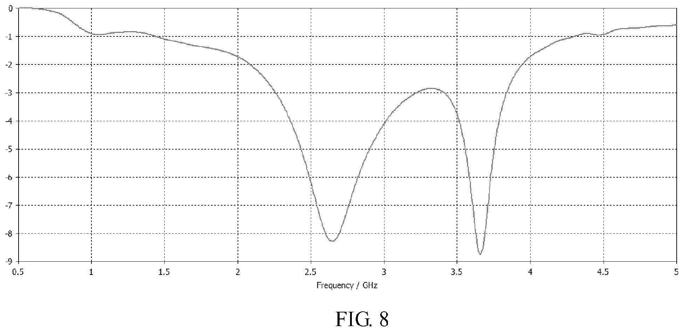

When the changeover switch 5 is switched to be coupled to the inductive device 7, referring to FIG. 7, FIG. 7 is an equivalent circuit diagram according to an exemplary embodiment. In this case, a resonance under a three-quarter wavelength mode of the first sub-antenna is configured to radiate a signal of a Sub-6GHz band. Referring to FIG. 8, FIG. 8 is a schematic diagram of a return loss of a radiated signal. From FIG. 8, it can be seen that the first sub-antenna and the second sub-antenna in this case implement radiation of a high frequency signal and a signal of a Sub-6GHz band.

It is also to be noted that the number of the changeover switch 5, the second capacitive device 6 and the inductive device 7 and the number of channel statuses will not be limited in the embodiments of the present disclosure. That is, since the Sub-6GHz band includes a plurality of bands such as n77, n78 and n79, in some embodiments, a plurality of changeover switches 5, a plurality of second capacitive devices 6 or a plurality of inductive devices 7 may be provided, so as to implement radiation of signals of the different bands n77, n78 and n79. For example, when a signal of the band n77 is radiated, the capacitance value of the second capacitive device 6 is 2.7 pF, and the inductance value of the inductive device 7 is 8 n.

In the embodiments of the present disclosure, an antenna is provided, which is applied to a mobile terminal. The antenna is mainly implemented by a first metal frame and a second metal frame of the mobile terminal, a breaking joint being provided between the first metal frame and the second metal frame. A specified position of an end, close to the breaking joint, of the first metal frame includes a feeding point, the feeding point is coupled to a first capacitive device, the first capacitive device is coupled to a changeover switch, the changeover switch is coupled to a second capacitive device or an inductive device, the second capacitive device or the inductive device is coupled to a first ground point, and the first metal frame is coupled to a second ground point, so as to form a portion of the antenna. In addition, the second metal frame is coupled to a third ground point, so as to form another portion of the antenna. Since the length of the first metal frame is within the range of a quarter wavelength of a specified band, when the changeover switch is switched between the second capacitive device and the inductive device, the two portions of the antenna not only may implement radiation of the existing band signal, but also may implement radiation of a signal having a frequency of 2.3 GHz to 2.7 GHz by using a harmonic wave under a high-order mode of the first metal frame, that is, may also radiate a signal of a Sub 6GHz band. In the embodiments of the present disclosure, the antenna implements radiation of various different band signals without the addition of other devices and antenna branches.

After considering the specification and implementing the disclosure disclosed here, other implementation solutions of the present disclosure would readily be conceivable to a person skilled in the art. The present application is intended to cover any variations, purposes or adaptive changes of the present disclosure, and these variations, purposes or adaptive changes follow the general principle of the present disclosure and include common knowledge or customary technical means, not disclosed by the present disclosure, in the technical field. The specification and the embodiments are only regarded as being exemplary.

It will be appreciated that the present disclosure is not limited to a precise structure having been described above and shown in the drawings, and various modifications and changes may be made without departing from the scope thereof.

## Claims

1. A mobile terminal comprising an antenna, the mobile terminal comprising a first metal frame (1) and a second metal frame (2), a breaking joint being provided between a first end of the first metal frame (1) and a first end of the second metal frame (2), a length of the first metal frame (1) being within a range of a quarter wavelength of a specified band, and the length of the first metal frame (1) being greater than a length of the second metal frame (2),
wherein the antenna comprises a first sub-antenna and a second sub-antenna,
wherein the first metal frame (1) comprises a feeding point (3), the feeding point (3) is coupled to a first end of a first capacitive device (4), a second end of the first capacitive device (4) is coupled to a first end of a changeover switch (5), a second end of the changeover switch (5) is coupled to a first end of a second capacitive device (6) or a first end of an inductive device (7), a second end of the second capacitive device (6) and a second end of the inductive device (7) are coupled to a first ground point, and a second end of the first metal frame (1) is coupled to a second ground point, so as to form the first sub-antenna; and
a second end of the second metal frame (2) is coupled to a third ground point, so as to form the second sub-antenna, **characterized in that**: the feeding point (3) is located at a specific position of the first end of the first metal frame.

2. The mobile terminal of claim 1, wherein the changeover switch (5) is located at a center point of the first metal frame (1).

3. The mobile terminal of claim 1, wherein
responsive to switching the changeover switch (5) to be coupled to the second capacitive device (6), the first sub-antenna and the second sub-antenna are configured to radiate a signal having a frequency of 700 MHz to 900 MHz and 1.7 GHz to 2.2 GHz and a signal having a frequency of 2.3 GHz to 2.7 GHz; and responsive to switching the changeover switch (5) to be coupled to the inductive device (7), the first sub-antenna and the second sub-antenna are configured to radiate a signal having a frequency of 3.5 GHz to 3.8 GHz and a signal having a frequency of 2.3 GHz to 2.7 GHz.

4. The mobile terminal of claim 3, wherein
responsive to switching the changeover switch (5) to be coupled to the second capacitive device (6), a portion between a position where the second capacitive device (6) is located in the first sub-antenna and the breaking joint and the second sub-antenna are jointly configured to radiate a signal having a frequency of 1.7 GHz to 2.2 GHz, a resonance under a quarter wavelength mode of the first sub-antenna is configured to radiate a signal having a frequency of 700 MHz to 900 MHz, and a resonance under a three-quarter wavelength mode of the first sub-antenna is configured to radiate a signal having a frequency of 2.3 GHz to 2.7 GHz; and
responsive to switching the changeover switch (5) to be coupled to the inductive device (7), a portion between a position where the inductive device (7) is located in the first sub-antenna and the breaking joint and the second sub-antenna are jointly configured to radiate a signal having a frequency of 3.5 GHz to 3.8 GHz, a resonance under a three-quarter wavelength mode of the first sub-antenna is configured to radiate the signal having a frequency of 2.3 GHz to 2.7 GHz.

5. The mobile terminal of any one of claims 1 to 4, wherein a difference between the length of the first metal frame (1) and 30 mm is within a preset range, and the length of the second metal frame (2) ranges from 16 mm to 20 mm.

6. The mobile terminal of any one of claims 1 to 4, wherein the first capacitive device (4) has a capacitance ranging from 0.5 pF to 2.5 pF.

7. The mobile terminal of any one of claims 1 to 4, wherein both the first metal frame (1) and the second metal frame (2) are a bottom frame of the mobile terminal.

8. The mobile terminal of any one of claims 1 to 4, wherein the breaking joint between the first end of the first metal frame (1) and the first end of the second metal frame (2) has a width of 2 mm.

9. The mobile terminal of any one of claims 1 to 4, wherein the second end of the first capacitive device (4) is coupled to the first end of the changeover switch (5) through the first metal frame (1).

## Patentansprüche

1. Mobiles Endgerät, das eine Antenne aufweist, wobei das mobile Endgerät einen ersten Metallrahmen (1) und einen zweiten Metallrahmen (2) aufweist, wobei ein Bruchgelenk zwischen einem ersten Ende des ersten Metallrahmens (1) und einem ersten Ende des zweiten Metallrahmens (2) vorgesehen ist, wobei eine Länge des ersten Metallrahmens (1) innerhalb eines Bereichs von einer Viertelwellenlänge eines bestimmten Bandes liegt, und wobei die Länge des ersten Metallrahmens (1) größer als eine Länge des zweiten Metallrahmens (2) ist,
wobei die Antenne eine erste Unterantenne und eine zweite Unterantenne aufweist,
wobei der erste Metallrahmen (1) einen Einspeisepunkt (3) aufweist, wobei der Einspeisepunkt (3) mit einem ersten Ende einer ersten kapazitiven Vorrichtung (4) gekoppelt ist, ein zweites Ende der ersten kapazitiven Vorrichtung (4) mit einem ersten Ende eines Wechselschalters (5) gekoppelt ist, ein zweites Ende des Wechselschalters (5) mit einem ersten Ende der zweiten kapazitiven Vorrichtung (6) oder einem ersten Ende einer induktiven Vorrichtung (7) gekoppelt ist, ein zweites Ende der zweiten kapazitiven Vorrichtung (6) und ein zweites Ende der induktiven Vorrichtung (7) mit einem ersten Erdungspunkt gekoppelt sind, und ein zweites Ende des ersten Metallrahmens (1) mit einem zweiten Erdungspunkt gekoppelt ist, um die erste Unterantenne zu bilden; und
wobei ein zweites Ende des zweiten Metallrahmens (2) mit einem dritten Erdungspunkt gekoppelt ist, um die zweite Unterantenne zu bilden, **dadurch gekennzeichnet, dass**: der Einspeisepunkt (3) sich an einer bestimmten Position des ersten Endes des ersten Metallrahmens befindet.

2. Mobiles Endgerät nach Anspruch 1, wobei sich der Wechselschalter (5) an einem Mittelpunkt des ersten Metallrahmens (1) befindet.

3. Mobiles Endgerät nach Anspruch 1, wobei
als Reaktion auf das Schalten des Wechselschalters (5), um mit der zweiten kapazitiven Vorrichtung (6) gekoppelt zu werden, die erste Unterantenne und die zweite Unterantenne so ausgebildet sind, dass sie ein Signal mit einer Frequenz von 700 MHz bis 900 MHz und 1,7 GHz bis 2,2 GHz und ein Signal mit einer Frequenz von 2,3 GHz bis 2,7 GHz ausstrahlen; und
als Reaktion auf das Schalten des Wechselschalters (5), um mit der induktiven Vorrichtung (7) gekoppelt zu werden, die erste Unterantenne und die zweite Unterantenne so ausgebildet sind, dass sie ein Signal mit einer Frequenz von 3,5 GHz bis 3,8 GHz und ein Signal mit einer Frequenz von 2,3 GHz bis 2,7 GHz ausstrahlen.

4. Mobiles Endgerät nach Anspruch 3, wobei
als Reaktion auf das Schalten des Wechselschalters (5), um mit der zweiten kapazitiven Vorrichtung (6) gekoppelt zu werden, ein Abschnitt zwischen einer Position, in der sich die zweite kapazitive Vorrichtung (6) in der ersten Unterantenne befindet, und das Bruchgelenk und die zweite Unterantenne gemeinsam so ausgebildet sind, dass sie ein Signal mit einer Frequenz von 1,7 GHz bis 2,2 GHz aussenden, wobei eine Resonanz unter einem Viertelwellenlängenmodus der ersten Unterantenne so ausgebildet ist, dass sie ein Signal mit einer Frequenz von 700 MHz bis 900 MHz aussendet, und wobei eine Resonanz unter einem Drittelwellenlängenmodus der ersten Unterantenne so ausgebildet ist, dass sie ein Signal mit einer Frequenz von 2,3 GHz bis 2,7 GHz aussendet; und
als Reaktion auf das Schalten der Wechselschalters (5), um mit der induktiven Vorrichtung (7) gekoppelt zu werden, ein Abschnitt zwischen einer Position, in der sich die induktive Vorrichtung (7) in der erste Unterantenne befindet, und das Bruchgelenk und die zweite Unterantenne gemeinsam so ausgebildet sind, dass sie ein Signal mit einer Frequenz von 3,5 GHz bis 3,8 GHz aussenden, wobei eine Resonanz unter einem Drittelwellenlängenmodus der ersten Unterantenne so ausgebildet ist, dass sie ein Signal mit einer Frequenz von 2,3 GHz bis 2,7 GHz aussendet.

5. Mobiles Endgerät nach einem der Ansprüche 1 bis 4, wobei eine Differenz zwischen der Länge des ersten Metallrahmens (1) und 30 mm innerhalb eines vorbestimmten Bereichs liegt, und die Länge des zweiten Metallrahmens (2) von 16 mm bis 20 mm reicht.

6. Mobiles Endgerät nach einem der Ansprüche 1 bis 4, wobei die erste kapazitive Vorrichtung (4) eine Kapazität im Bereich von 0,5 pF bis 2,5 pF aufweist.

7. Mobiles Endgerät nach einem der Ansprüche 1 bis 4, wobei sowohl der erste Metallrahmen (1) als auch der zweite Metallrahmen (2) ein Unterrahmen des mobilen Endgeräts sind.

8. Mobiles Endgerät nach einem der Ansprüche 1 bis 4, wobei das Bruchgelenk zwischen dem ersten Ende des ersten Metallrahmens (1) und dem erstem Ende des zweiten Metallrahmens (2) eine Breite von 2 mm aufweist.

9. Mobiles Endgerät nach einem der Ansprüche 1 bis 4, wobei das zweite Ende der ersten kapazitiven Vorrichtung (4) mit dem ersten Ende des Wechselschalters (5) durch den ersten Metallrahmen (1) gekoppelt ist.

## Revendications

1. Terminal mobile comprenant une antenne, le terminal mobile comprenant un premier cadre métallique (1) et un second cadre métallique (2), un joint de rupture étant prévu entre une première extrémité du premier cadre métallique (1) et une première extrémité du second cadre métallique (2), une longueur du premier cadre métallique (1) se trouvant dans une plage d'un quart d'onde d'une bande spécifiée, et la longueur du premier cadre métallique (1) étant supérieure à une longueur du second cadre métallique (2),
l'antenne comprenant une première sous-antenne et une seconde sous-antenne,
le premier cadre métallique (1) comprenant un point d'alimentation (3), le point d'alimentation (3) étant couplé à une première extrémité d'un premier dispositif capacitif (4), une seconde extrémité du premier dispositif capacitif (4) étant couplée à une première extrémité d'un commutateur (5), une seconde extrémité du commutateur (5) étant couplée à une première extrémité d'un second dispositif capacitif (6) ou à une première extrémité d'un dispositif inductif (7), une seconde extrémité du second dispositif capacitif (6) et une seconde extrémité du dispositif inductif (7) étant couplées à un premier point de masse, et une seconde extrémité du premier cadre métallique (1) étant couplée à un deuxième point de masse, de manière à former la première sous-antenne ; et
une seconde extrémité du second cadre métallique (2) étant couplée à un troisième point de masse, de manière à former la seconde sous-antenne, **caractérisé en ce que** : le point d'alimentation (3) est situé au niveau d'une position spécifique de la première extrémité du premier cadre métallique.

2. Terminal mobile selon la revendication 1, le commutateur (5) étant situé au niveau d'un point central du premier cadre métallique (1).

3. Terminal mobile selon la revendication 1,
en réponse à la commutation du commutateur (5) à coupler au second dispositif capacitif (6), la première sous-antenne et la seconde sous-antenne étant configurées pour rayonner un signal ayant une fréquence de 700 MHz à 900 MHz et 1,7 GHz à 2,2 GHz et un signal ayant une fréquence de 2,3 GHz à 2,7 GHz ; et en réponse à la commutation du commutateur (5) à coupler au dispositif inductif (7), la première sous-antenne et la seconde sous-antenne étant configurées pour rayonner un signal ayant une fréquence de 3,5 GHz à 3,8 GHz et un signal ayant une fréquence de 2,3 GHz à 2,7 GHz.

4. Terminal mobile selon la revendication 3,
en réponse à la commutation du commutateur (5) à coupler au second dispositif capacitif (6), une partie entre une position où le second dispositif capacitif (6) est situé dans la première sous-antenne et le joint de rupture et la seconde sous-antenne étant configurés conjointement pour rayonner un signal ayant une fréquence de 1,7 GHz à 2,2 GHz, une résonance sous un mode quart d'onde de la première sous-antenne étant configurée pour rayonner un signal ayant une fréquence de 700 MHz à 900 MHz, et la résonance sous un mode trois quarts d'onde de la première sous-antenne étant configurée pour rayonner un signal ayant une fréquence de 2,3 GHz à 2,7 GHz ; et en réponse à la commutation du commutateur (5) à coupler au dispositif inductif (7), une partie entre une position où le dispositif inductif (7) est situé dans la première sous-antenne et le joint de rupture et la seconde sous-antenne étant configurés conjointement pour rayonner un signal ayant une fréquence de 3,5 GHz à 3,8 GHz, une résonance sous un mode trois quarts d'onde de la première sous-antenne étant configurée pour rayonner le signal ayant une fréquence de 2,3 GHz à 2,7 GHz.

5. Terminal mobile selon l'une quelconque des revendications 1 à 4, une différence entre la longueur du premier cadre métallique (1) et 30 mm se trouvant dans une plage prédéfinie, et la longueur du second cadre métallique (2) étant comprise dans la plage de 16 mm à 20 mm.

6. Terminal mobile selon l'une quelconque des revendications 1 à 4, le premier dispositif capacitif (4) ayant une capacité allant de 0,5 pF à 2,5 pF.

7. Terminal mobile selon l'une quelconque des revendications 1 à 4, à la fois le premier cadre métallique (1) et le second cadre métallique (2) étant un cadre inférieur du terminal mobile.

8. Terminal mobile selon l'une quelconque des revendications 1 à 4, le joint de rupture entre la première extrémité du premier cadre métallique (1) et la première extrémité du second cadre métallique (2) ayant une largeur de 2 mm.

9. Terminal mobile selon l'une quelconque des revendications 1 à 4, la seconde extrémité du premier dispositif capacitif (4) étant couplée à la première extrémité du commutateur (5) à travers le premier cadre métallique (1).
